# EUROPEAN PATENT APPLICATION

(11) **EP 3 975 089 A1**
(43) Date of publication of application: **30.03.2022**
(21) Application number: 21159714.1
(22) Date of filing: 26.02.2021
(51) Int. Cl.: G06Q 10/10

(54) **MULTI-MODEL TRAINING METHOD AND DEVICE BASED ON FEATURE EXTRACTION, AN ELECTRONIC DEVICE, AND A MEDIUM**

(30) Priority: 25.09.2020 CN 202011025657
(71) Applicant: BEIJING BAIDU NETCOM SCIENCE AND TECHNOLOGY CO. LTD., 100085 Beijing (CN)
(72) Inventor: ZHOU, Yangjie, Beijing, 100085 (CN); CHEN, Lianghui, Beijing, 100085 (CN); FANG, Jun, Beijing, 100085 (CN); FU, Yan, Beijing, 100085 (CN)
(74) Representative: Isarpatent

(57) **Abstract**

A method includes training, in collaboration with corresponding ones of a plurality of collaborators, corresponding ones of a plurality of tree models based on corresponding data of user samples shared with the corresponding ones of the plurality of collaborators; performing feature importance evaluation on the trained tree models for assigning respective weights to feature columns generated by respective ones of the tree models; in response to a determination that a linear model is to be trained by a first collaborator, inputting data of a first user sample shared with the first collaborator to the tree model corresponding to the first collaborator and the tree models corresponding to a second collaborator, to obtain a plurality of one-hot encoded feature columns; and screening the obtained feature columns based on the respective weights and training the linear model according to the screened feature columns and the data of the first user sample.

## Description

### TECHNICAL FIELD

The present disclosure relates to the technical field of cloud platforms and deep learning, and in particular, to a multi-model training method and device based on feature extraction, an electronic device, and a medium.

### BACKGROUND

In recent years, the machine learning technology has developed rapidly and achieved excellent application effects in the fields of information identification, recommendation engines, credit financial services, etc. A large number of experimental results have proved that machine learning models have good robustness and generalization. When a recommendation engine is used for advertising services, in order to increase the diversity of training data, it is desired that data from a plurality of companies can be fused to train the recommendation engine. However, due to business differences between the companies, data of the companies also reflects different business characteristics. Therefore, how to achieve automatic screening of relevant data to fully increase the diversity of training data has become a technical key. In addition, with the gradual strengthening of domestic and foreign data supervision and public privacy protection, data confidentiality also hinders data collaboration between many companies.

The methods described in this section are not necessarily methods that have been previously conceived or employed. It should not be assumed that any of the methods described in this section are considered to be the prior art just because they are included in this section, unless otherwise indicated expressly. Similarly, the problem mentioned in this section should not be considered to be universally recognized in any prior art, unless otherwise indicated expressly.

### SUMMARY

According to an aspect of the present disclosure, a multi-model training method based on federated feature extraction is provided, the method comprising: training, in collaboration with corresponding ones of a plurality of collaborators, corresponding ones of a plurality of tree models based on corresponding data of user samples shared with the corresponding ones of the plurality of collaborators, wherein data transmission with each of the plurality of collaborators is performed in an encrypted form; performing feature importance evaluation on the trained plurality of tree models for assigning respective weights to feature columns generated by respective ones of the plurality of tree models; in response to a determination that a linear model is to be trained in collaboration with a first collaborator of the plurality of collaborators, inputting data of a first user sample shared with the first collaborator to the tree model corresponding to the first collaborator and one or more tree models corresponding to a second collaborator of the plurality of collaborators, to obtain a plurality of one-hot encoded feature columns, wherein the second collaborator is one or more of the plurality of collaborators other than the first collaborator; and screening the obtained feature columns based on the respective weights and training the linear model according to the screened feature columns and the data of the first user sample.

According to another aspect of the present disclosure, a multi-model training device based on federated feature extraction is provided, the device comprising: a tree model training unit configured to train, in collaboration with corresponding ones of a plurality of collaborators, corresponding ones of a plurality of tree models based on corresponding data of user samples shared with the corresponding ones of the plurality of collaborators, wherein data transmission with each of the plurality of collaborators is performed in an encrypted form; an importance evaluation unit configured to perform feature importance evaluation on the trained plurality of tree models for assigning respective weights to feature columns generated by respective ones of the plurality of tree models; a feature extraction unit configured to: in response to a determination that a linear model is to be trained in collaboration with a first collaborator of the plurality of collaborators, inputting data of a first user sample shared with the first collaborator to the tree model corresponding to the first collaborator and one or more tree models corresponding to a second collaborator of the plurality of collaborators, to obtain a plurality of one-hot encoded feature columns, wherein the second collaborator is one or more of the plurality of collaborators other than the first collaborator; and a linear model training unit configured to screen the obtained feature columns based on the respective weights and train the linear model according to the screened feature columns and the data of the first user sample.

According to another aspect of the present disclosure, a computer program product is provided, the computer program product comprising program code portions for performing the multi-model training method based on federated feature extraction described in the present disclosure when the computer program product is executed on one or more computing devices.

According to another aspect of the present disclosure, a computer-readable storage medium that stores a program is provided, the program comprising instructions that, when executed by a processor of an electronic device, cause the electronic device to perform the multi-model training method based on federated feature extraction described in the present disclosure.

According to an aspect of the present disclosure, the multi-model training method based on federated feature extraction effectively fuses feature data of a plurality of collaborators, and effectively screens cross features, based on federated learning.

These and other aspects of the present disclosure will be clear from the embodiments described below, and will be clarified with reference to the embodiments described below.

### DETAILED DESCRIPTION

The drawings exemplarily show embodiments and form a part of the specification, and are used to explain exemplary implementations of the embodiments together with a written description of the specification. The embodiments shown are merely for illustrative purposes and do not limit the scope of the claims. Throughout the drawings, like reference signs denote like but not necessarily identical elements.
Fig. 1 is a schematic diagram showing a scenario of a multi-model training method based on federated feature extraction according to an exemplary embodiment;
Fig. 2 is a flowchart showing a multi-model training method based on federated feature extraction according to an exemplary embodiment;
Fig. 3 is a schematic diagram showing multi-model training based on federated feature extraction according to an exemplary embodiment;
Fig. 4 is a schematic structural diagram showing a multi-model training device based on federated feature extraction according to an exemplary embodiment; and
Fig. 5 is a structural block diagram showing an exemplary computing device that can be applied to an exemplary embodiment.

### Detailed Description of Embodiments

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

In the scenario of a recommendation engine, it is necessary to comprehensively utilize behavior and attributes of users, attributes, content, and classification of objects, and a social relationship between users, etc., so as to explore preferences and needs of the users, and actively recommend objects of their interests or objects meeting their needs to the users. The richness and diversity of available user data also determines the recommendation effect of the recommendation engine. Specifically, for example, in an advertisement recommendation scenario, with the vigorous development of the Internet advertising industry, advertisers' requirements for corresponding indicators have also increased. When entity companies where the advertisers put advertisements have only data related to their own business or only related recommendation results, it is difficult to effectively increase the click-through rate (CTR), the conversion rate, etc. of the advertisements. How to effectively synthesize cross features of a plurality of collaborators to train related models with the data privacy has become a key to increase in the click-through rate (CTR), the conversion rate, etc.

Federated modeling achieves the completion of feature crossing within a participant and feature crossing between participants while holding data in the local. On the premise of ensuring information security during big data exchange, protecting terminal data and personal data privacy, and ensuring legal and regulatory compliance, federated learning develops efficient machine learning among a plurality of participants or a plurality of computing nodes.

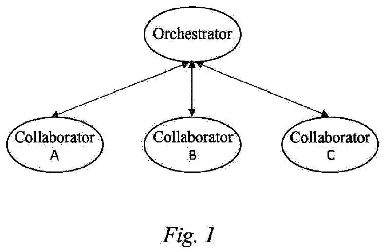

As shown in Fig. 1, an orchestrator may collaborate with a plurality of collaborators A, B, C, etc. for training based on behavior data of their common users, so that each of them recommends advertising services by using an advertisement recommendation model trained from its own data and data of the other parties. The advertisement recommendation model is originally trained based on its own data. Due to diverse advertising services, the orchestrator has been added as a collaborator to use data of both parties to train the model. However, in fact, training based on the data of both parties is gradually unable to meet the advertisers' increasing requirements for corresponding indicators.

Further, for example, Baidu being the world's largest Chinese search engine, many platforms may seek data collaboration with Baidu, and therefor Baidu has the ability to act as an orchestrator. A platform as an orchestrator can use its advantages in data collaboration with a plurality of collaborator platforms to promote the fusion of multi-party data, so as to increase the click-through rate (CTR), the conversion rate, etc. of advertisements based on more comprehensive data, while ensuring information security during big data exchange, protecting terminal data and personal data privacy, and ensuring legal and regulatory compliance. However, due to the similarities and differences between businesses of the plurality of collaborators, it may be inappropriate to use all of output feature data for model training. This may fail to increase the click-through rate as expected, but would be counterproductive.

Due to the high feature dimensionality in a recommendation scenario, a linear model is usually used for learning and training to reuse the effect of a full data set. However, the linear model cannot capture nonlinear information, and a large number of engineering experiments are required to combine features to find effective cross information. It is considered that a tree model is used as a feature extractor to discretize a set of continuous features and supplement cross information between features.

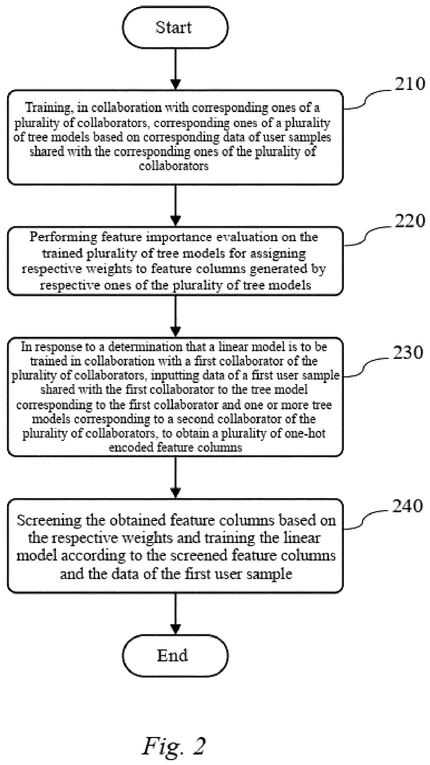

Therefore, according to an aspect of the present disclosure, a multi-model training method based on federated feature extraction is provided. As shown in Fig. 2, the method comprises: training, in collaboration with corresponding ones of a plurality of collaborators, corresponding ones of a plurality of tree models based on corresponding data of user samples shared with the corresponding ones of the plurality of collaborators, wherein data transmission with each of the plurality of collaborators is performed in an encrypted form (step 210); performing feature importance evaluation on the trained plurality of tree models for assigning respective weights to feature columns generated by respective ones of the plurality of tree models (step 220); in response to a determination that a linear model is to be trained in collaboration with a first collaborator of the plurality of collaborators, inputting data of a first user sample shared with the first collaborator to the tree model corresponding to the first collaborator and one or more tree models corresponding to a second collaborator of the plurality of collaborators, to obtain a plurality of one-hot encoded feature columns, wherein the second collaborator is one or more of the plurality of collaborators other than the first collaborator (step 230); and screening the obtained feature columns based on the respective weights and training the linear model according to the screened feature columns and the data of the first user sample (step 240).

According to an aspect of the present disclosure, the multi-model training method based on federated feature extraction effectively fuses feature data of a plurality of collaborators, and effectively screens cross features, based on federated learning.

According to some embodiments, the data of the shared user samples comprises: label data indicating whether the user samples click advertisements and behavior data of the user samples in both parties.

In some examples, the relative importance of features to target variable prediction, for example, can be evaluated by the relative order of using features as decision nodes in a decision tree. A feature used at the top of the decision tree will contribute to final prediction decisions for more samples. Therefore, importance of each feature can be evaluated by a proportion of samples for which the feature contributes to the final prediction. In an example of an XGBoost tree model, a corresponding score, that is, a weight, of each feature is obtained by using a feature importance score, i.e. feature_importances.

According to some embodiments, step 210 of training the corresponding ones of a plurality of tree models comprises: receiving public keys respectively generated by the plurality of collaborators based on an encryption algorithm, to encrypt data to be transmitted to corresponding ones of the plurality of collaborators using corresponding ones of the public keys; for each collaborator: receiving derivatives encrypted by the collaborator based on its generated public keys, to compute a gradient sum for corresponding bins; and transmitting the gradient sum to the collaborator, so that the collaborator decrypts the gradient sum by using a private key generated based on the encryption algorithm, to train tree model corresponding to the collaborator.

In consideration of security and privacy, if data is directly given to the other party, there will be problems such as information leakage and value loss. Therefore, there is no direct transmission of intermediate results in a training process, computation is only performed in an encrypted space instead, and there is no risk of user data leakage.

According to some embodiments, the encryption algorithm comprises one of: an RSA algorithm and a Pailler algorithm. It should be understood that, other encryption algorithms applicable to the present disclosure are also possible and are not limited.

In some examples, a platform as an orchestrator collaborates with each collaborator to train a tree model, for example: an orchestrator collaborates, based on data of user samples shared with a collaborator A, to train a tree model, wherein the training process comprises the following steps:
A training initiator (for example, the collaborator A) initializes a public key and a private key based on an encryption algorithm, wherein the private key is retained in the local for decryption, and the public key can be sent to a data provider (for example, the orchestrator), such that the collaborator can encrypt data to be transmitted according to the same encryption algorithm, and a data trainer can decrypt the data with the private key after receiving the data. The training initiator computes a first-order derivative [[*gᵢ*]] and a second-order derivative [[*hᵢ*]] of label data indicating whether its common samples click an advertisement, and sends a corresponding sample ID and corresponding encrypted derivative results to the data provider. The data provider traverses each feature to compute gradient sums [[*Gᵢ*]] = [[g*ᵢ*]] and [[*Hᵢ*]] = [[*hᵢ*]] for corresponding bins, and returns results to the training initiator. After decrypting the gradient sums, the training initiator computes a gain size for each feature, takes the feature with the largest gain as a dividing node, and records the node on a server of the training initiator. Training may not be stopped until a loss fluctuation is less than a specific threshold or a predetermined number of iterations are performed. At this time, the training initiator (for example, the collaborator A) and the data provider (for example, the orchestrator) each have trained a tree model based on the above user data. Similarly, a training process of a tree model between each of collaborators B, C, D, etc, and the orchestrator is the same as that described above. Details are not repeated herein.

Binning may also be referred to as bucketing, which mainly includes equal-frequency binning, equal-width binning, clustering binning, etc., wherein the clustering binning comprises K-means clustering and DBSCAN clustering. Clustering outliers as one category can solve the problem in the situation that some features have anomaly values. For example, some users may give false data, for example, an age of 200 years. In some examples, an income is a feature, and different income values are specific feature data. Income binning may involve grouping income values, one or more income values are selected as quantiles, and incomes are grouped into a plurality of bins. The monthly incomes of 10,000 yuan and 20,000 yuan are selected as the quantiles, and the incomes are grouped into three bins: income_0 (a monthly income greater than 20,000): high income; income_1 (a monthly income from 10,000 to 20,000): middle income; and income_2 (a monthly income less than 10,000): low income.

After completing federated tree model training, a user behavior data set is traversed to generate a one-hot feature vector extracted by a corresponding user from the tree model. It should be noted that the model needs to be stored in both parties of collaboration. Therefore, the generated one-hot feature will also be divided into two parts that are to be stored the respective parties. One-hot encoding is encoding where only one bit is significant. The method is to use an N-bit status register to encode N states. Each state has its own independent register bit, and has only one significant register bit at any time.

On this basis, the one-hot feature is spliced with local data, and the superiority of the linear model for sparse data training and the information of extracted cross features are fully utilized.

After the orchestrator has stored a plurality of tree models trained in collaboration with a plurality of collaborators, the plurality of tree models can be used after feature extraction and the synthesis of data advantages of the plurality of collaborators, to train a linear model required by a collaborator (for example, the collaborator A) with advertising service needs, thereby training an advertisement recommendation model that synthesizes multi-party data to meet the needs of diverse advertising services.

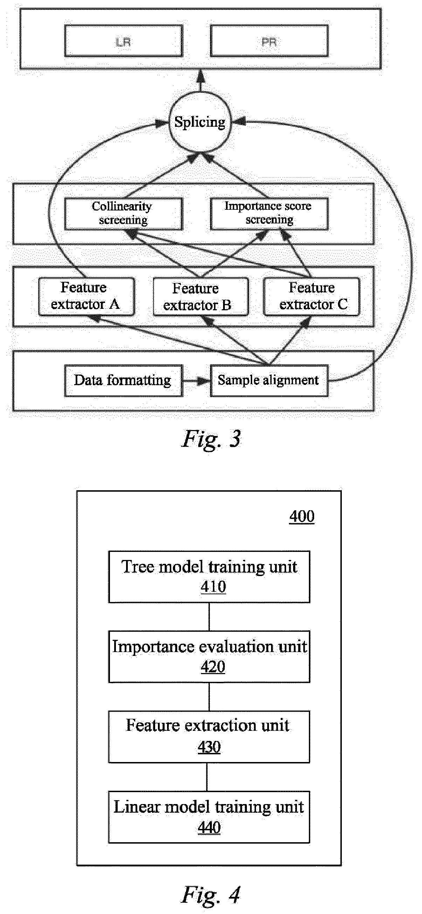

As shown in Fig. 3, local label data of the collaborator A and user behavior data of the collaborator A and the orchestrator are input, through data formatting and sample alignment, to a plurality of tree models stored on the orchestrator. Data formatting mainly includes operations such as a extraction, transformation, and loading (ETL) process, performing statistical conversion on a part of time sequence data according to customized logic, and specifying discretized data for encoding conversion. Sample alignment is aligning user samples of the collaborator and the orchestrator and is generally matching a mobile phone number encrypted based on MD5 to confirm coverage. Certainly, it should be understood that other alignment methods are also possible, such as an encrypted email address. The tree models of the orchestrator are used as a plurality of feature extractors (A/B/C, etc.). The feature columns output by the plurality of tree models are subjected to one-hot encoding and then subjected to collinearity and importance score screening. The screened feature columns and the original user behavior data are used as inputs to jointly train the linear model of the orchestrator and the collaborator A to train an advertisement recommendation model for the collaborator A that synthesizes data features of a plurality of parties.

According to some embodiments, step 240 of screening the obtained feature columns based on the respective weights and training the linear model according to the screened feature columns and the data of the first user sample comprises: selecting feature columns obtained by the tree models corresponding to the first collaborator, to constitute a first data set with the selected feature columns and the data of the first user sample; screening feature columns obtained by the one or more tree models corresponding to the second collaborator, to constitute a second data set with the screened feature columns and the first data set; and training, based on the second data set, the linear model.

According to some embodiments, said screening the feature columns obtained by the one or more tree models corresponding to the second collaborator to constitute a second data set with the screened feature columns and the first data set comprises: filtering out feature columns with weights less than a first threshold from the feature columns obtained by the one or more tree models corresponding to the second collaborator to obtain first remaining feature columns; performing correlation analysis on feature column pairs constituted by every two feature columns in the first remaining feature columns; determining the feature column pairs having correlation coefficients greater than a second threshold to constitute second remaining feature columns with all feature column pairs having correlation coefficients not greater than the second threshold; and selecting a feature column with a larger weight value in each of the determined feature column pairs having correlation coefficients greater than the second threshold, to use selected feature columns and the second remaining feature columns as the screened feature columns.

According to some embodiments, said screening the feature columns obtained by the one or more tree models corresponding to the second collaborator to constitute a second data set with the screened feature columns and the first data set comprises: setting respective weight thresholds for the one or more tree models corresponding to the second collaborator; filtering, according to the respective weight thresholds, the feature columns obtained by the one or more tree models corresponding to the second collaborator to filter out feature columns with weights less than corresponding ones of the respective weight thresholds, so as to obtain first remaining feature columns; performing correlation analysis on feature column pairs constituted by every two feature columns in the first remaining feature columns; determining the feature column pairs having correlation coefficients greater than a second threshold to constitute second remaining feature columns with all feature column pairs having correlation coefficients not greater than the second threshold; and selecting a feature column with a larger weight value in each of the determined feature column pairs having correlation coefficients greater than the second threshold, to use selected feature columns and the second remaining feature columns as the screened feature columns.

In some examples, the feature columns obtained by the tree models corresponding to the second collaborator are screened, that is, the feature columns output by the tree models trained by the orchestrator in collaboration with the collaborators B, C, etc. are screened. Each of the output feature columns has a corresponding importance score, that is, the weight mentioned above, which is screened by a weight threshold customized by an engineer. In addition, when a screened feature column pair with higher importance scores has a high collinearity (that is, correlation), a feature column with a lower importance score in the feature column pair is ignored. As shown in Fig. 3, the screened feature column and the data of the shared user samples between the collaborator A and the orchestrator are spliced and then used for collaborative training of the linear model between the orchestrator and the collaborator A.

Through the screening of the feature column, user features of the plurality of collaborators are effectively used, while the effectiveness of the data is improved, and cross information of multi-party training data is compatible, which provides fast and efficient optimization methods for algorithm research and development engineers.

According to some embodiments, the tree model comprises one of: an XGBoost model and a LightGBM model.

According to some embodiments, the linear model comprises one of: a logistic regression (LR) model and a Poisson regression (PR) model.

In some examples, the advertisement recommendation model is preferably the XGBoost model and the logistic regression (LR) model.

According to another aspect of the present invention, a multi-model training device 400 based on federated feature extraction is provided, as shown in Fig. 4, the device comprising: a tree model training unit 410 configured to train, in collaboration with corresponding ones of a plurality of collaborators, corresponding ones of a plurality of tree models based on corresponding data of user samples shared with the corresponding ones of the plurality of collaborators, wherein data transmission with each of the plurality of collaborators is performed in an encrypted form; an importance evaluation unit 420 configured to perform feature importance evaluation on the trained plurality of tree models for assigning respective weights to feature columns generated by respective ones of the plurality of tree models; a feature extraction unit 430 configured to: in response to a determination that a linear model is to be trained in collaboration with a first collaborator of the plurality of collaborators, input data of a first user sample shared with the first collaborator to the tree model corresponding to the first collaborator and one or more tree models corresponding to a second collaborator of the plurality of collaborators, to obtain a plurality of one-hot encoded feature columns, wherein the second collaborator is one or more of the plurality of collaborators other than the first collaborator; and a linear model training unit 440 configured to screen the obtained feature columns based on the respective weights and train the linear model according to the screened feature columns and the data of the first user sample.

According to some embodiments, the tree model training unit 410 is configured to: receive public keys respectively generated by the plurality of collaborators based on an encryption algorithm, to encrypt data to be transmitted to corresponding ones of the plurality of collaborators using corresponding ones of the public keys; for each collaborator: receive derivatives encrypted by the collaborator using its generated public keys to compute a gradient sum for a corresponding bin; and transmit the gradient sum to the collaborator, so that the collaborator decrypts the gradient sum using a private key generated based on the encryption algorithm to train the tree model corresponding to the collaborator.

According to some embodiments, the linear model training unit 440 is configured to: select the feature columns obtained by the tree model corresponding to the first collaborator to constitute a first data set with the selected feature columns and the data of the first user sample; screen the feature columns obtained by the tree models corresponding to the second collaborator to constitute a second data set with the screened feature columns and the first data set; and train the linear model corresponding to the first collaborator based on the second data set.

According to some embodiments, said screening feature columns obtained by one or more the tree models corresponding to the second collaborator, to constitute a second data set with the screened feature columns and the first data set comprises: filter out feature columns with weights less than a first threshold from the feature columns obtained by one or more the tree models corresponding to the second collaborator to obtain first remaining feature columns; perform correlation analysis on feature column pairs constituted by every two feature columns in the first remaining feature columns; determine the feature column pairs having correlation coefficients greater than a second threshold to constitute second remaining feature columns with all feature column pairs having correlation coefficients not greater than the second threshold; and select a feature column with a larger weight value in each of the determined feature column pairs having correlation coefficients greater than the second threshold, to use selected feature columns and the second remaining feature columns as the screened feature columns.

According to some embodiments, said screening feature columns obtained by one or more the tree models corresponding to the second collaborator, to constitute a second data set with the screened feature columns and the first data set comprises: set respective weight thresholds for the one or more tree models corresponding to the second collaborator; filter, according to the respective weight thresholds, the feature columns obtained by the one or more tree models corresponding to the second collaborator to filter out feature columns with weights less than corresponding ones of the respective weight thresholds, so as to obtain first remaining feature columns; perform correlation analysis on feature column pairs constituted by every two feature columns in the first remaining feature columns; determine the feature column pairs having correlation coefficients greater than a second threshold to constitute second remaining feature columns with all feature column pairs having correlation coefficients not greater than the second threshold; and select a feature column with a larger weight value in each of the determined feature column pairs having correlation coefficients greater than the second threshold, to use selected feature columns and the second remaining feature columns as the screened feature columns.

According to some embodiments, the encryption algorithm comprises one of: an RSA algorithm and a Pailler algorithm.

According to some embodiments, the tree model comprises one of: an XGBoost model and a LightGBM model.

According to some embodiments, the linear model comprises one of: a logistic regression (LR) model and a Poisson regression (PR) model.

According to some embodiments, the data of the shared user samples comprises: label data indicating whether the user samples click advertisements and behavior data of the user samples.

Herein, the operations of the foregoing units 410 to 440 of the multi-model training device 400 based on federated feature extraction are respectively similar to the operations of steps 210 to 240 described above. Details are not repeated herein.

According to another aspect of the present disclosure, an electronic device is further provided, comprising: a processor; and a memory that stores a program, the program comprising instructions that, when executed by the processor, cause the processor to perform the foregoing multi-model training method based on federated feature extraction.

According to another aspect of the present disclosure, a computer-readable storage medium that store a program is provided, the program comprising instructions that, when executed by a processor of an electronic device, cause the electronic device to perform the foregoing multi-model training method based on federated feature extraction.

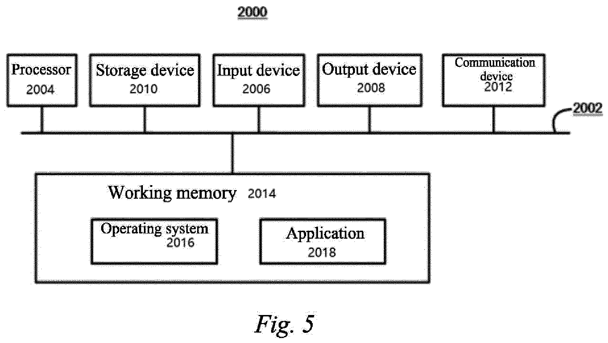

Referring to Fig. 5, a computing device 2000 is now described, which is an example of a hardware device (an electronic device) that can be applied to various aspects of the present disclosure. The computing device 2000 may be any machine configured to perform processing and/or computation, which may be, but is not limited to, a workstation, a server, a desktop computer, a laptop computer, a tablet computer, a personal digital assistant, a robot, a smartphone, an onboard computer, or any combination thereof. The foregoing multi-model training method based on federated feature extraction may be implemented, in whole or at least in part, by the computing device 2000 or a similar device or system.

The computing device 2000 may comprise elements in connection with a bus 2002 or in communication with a bus 2002 (possibly via one or more interfaces). For example, the computing device 2000 may comprise the bus 2002, one or more processors 2004, one or more input devices 2006, and one or more output devices 2008. The one or more processors 2004 may be any type of processors and may include, but are not limited to, one or more general purpose processors and/or one or more dedicated processors (e.g., special processing chips). The input device 2006 may be any type of device capable of inputting information to the computing device 2000, and may include, but is not limited to, a mouse, a keyboard, a touch screen, a microphone and/or a remote controller. The output device 2008 may be any type of device capable of presenting information, and may include, but is not limited to, a display, a speaker, a video/audio output terminal, a vibrator, and/or a printer. The computing device 2000 may also include a non-transitory storage device 2010 or be connected to a non-transitory storage device 2010. The non-transitory storage device may be non-transitory and may be any storage device capable of implementing data storage, and may include, but is not limited to, a disk drive, an optical storage device, a solid-state memory, a floppy disk, a flexible disk, a hard disk, a magnetic tape, or any other magnetic medium, an optical disc or any other optical medium, a read-only memory (ROM), a random access memory (RAM), a cache memory and/or any other memory chip or cartridge, and/or any other medium from which a computer can read data, instructions and/or code. The non-transitory storage device 2010 can be removed from an interface. The non-transitory storage device 2010 may have data/programs (including instructions)/code for implementing the methods and steps. The computing device 2000 may further comprise a communication device 2012. The communication device 2012 may be any type of device or system that enables communication with an external device and/or network, and may include, but is not limited to, a modem, a network interface card, an infrared communication device, a wireless communication device and/or a chipset, e.g., a Bluetooth^{™} device, a 1302.11 device, a Wi-Fi device, a WiMax device, a cellular communication device and/or the like.

The computing device 2000 may further comprise a working memory 2014, which may be any type of working memory that stores programs (including instructions) and/or data useful to the working of the processor 2004, and may include, but is not limited to, a random access memory and/or a read-only memory.

Software elements (programs) may be located in the working memory 2014, and may include, but is not limited to, an operating system 2016, one or more applications 2018, drivers, and/or other data and codes. The instructions for performing the foregoing methods and steps may be comprised in the one or more applications 2018, and the foregoing multi-model training method based on federated feature extraction can be implemented by the instructions of the one or more applications 2018 being read and executed by the processor 2004. More specifically, in the foregoing multi-model training method based on federated feature extraction, steps 210 to 240 may be implemented, for example, by the processor 2004 by executing the application 2018 having instructions for performing steps 210 to 240. Moreover, other steps of the foregoing multi-model training method based on federated feature extraction may be implemented, for example, by the processor 2004 by executing the application 2018 having instructions for performing corresponding steps. Executable code or source code of the instructions of the software elements (programs) may be stored in a non-transitory computer-readable storage medium (e.g., the storage device 2010), and may be stored in the working memory 2014 when executed (may be compiled and/or installed). The executable code or source code of the instructions of the software elements (programs) may also be downloaded from a remote location.

It should further be appreciated that various variations may be made according to specific requirements. For example, tailored hardware may also be used, and/or specific elements may be implemented in hardware, firmware, middleware, microcode, hardware description languages, or any combination thereof. For example, some or all of the disclosed methods and devices may be implemented by programming hardware (for example, a programmable logic circuit including a field programmable gate array (FPGA) and/or a programmable logic array (PLA)) in an assembly language or a hardware programming language (such as VERILOG, VHDL, and C++) by using the logic and algorithm in accordance with the present disclosure.

It should further be understood that the components of the computing device 2000 can be distributed over a network. For example, some processing may be executed by one processor while other processing may be executed by another processor away from the one processor. Other components of the computing system 2000 may also be similarly distributed. As such, the computing device 2000 can be interpreted as a distributed computing system that performs processing at a plurality of locations.

Although the embodiments or examples of the present disclosure have been described with reference to the accompanying drawings, it should be appreciated that the methods, systems and devices described above are merely exemplary embodiments or examples, and the scope of the present invention is not limited by the embodiments or examples, but only defined by the appended authorized claims and equivalent scopes thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. A computer-implemented multi-model training method based on federated feature extraction, the method comprising:
training (210), in collaboration with corresponding ones of a plurality of collaborators, corresponding ones of a plurality of tree models based on corresponding data of user samples shared with the corresponding ones of the plurality of collaborators, wherein data transmission with each of the plurality of collaborators is performed in an encrypted form;
performing (220) feature importance evaluation on the trained plurality of tree models for assigning respective weights to feature columns generated by respective ones of the plurality of tree models;
in response to a determination that a linear model is to be trained in collaboration with a first collaborator of the plurality of collaborators, inputting (230) data of a first user sample shared with the first collaborator to the tree model corresponding to the first collaborator and one or more tree models corresponding to a second collaborator of the plurality of collaborators, to obtain a plurality of one-hot encoded feature columns, wherein the second collaborator is one or more of the plurality of collaborators other than the first collaborator; and
screening (240) the obtained feature columns based on the respective weights and training the linear model according to the screened feature columns and the data of the first user sample.

2. The method according to claim 1, wherein the training the corresponding ones of a plurality of tree models comprises:
receiving public keys respectively generated by the plurality of collaborators based on an encryption algorithm, to encrypt data to be transmitted to corresponding ones of the plurality of collaborators using corresponding ones of the public keys;
for each collaborator:
receiving derivatives encrypted by the collaborator using its generated public key to compute a gradient sum for a corresponding bin; and
transmitting the gradient sum to the collaborator, so that the collaborator decrypts the gradient sum using a private key generated based on the encryption algorithm to train the tree model corresponding to the collaborator.

3. The method according to any one of the foregoing claims, wherein the screening the obtained feature columns based on the respective weights and training the linear model according to the screened feature columns and the data of the first user sample comprises:
selecting the feature columns obtained by the tree model corresponding to the first collaborator to constitute a first data set with the selected feature columns and the data of the first user sample;
screening the feature columns obtained by the one or more tree models corresponding to the second collaborator to constitute a second data set with the screened feature columns and the first data set; and
training the linear model based on the second data set.

4. The method according to claim 3, wherein the screening the feature columns obtained by the one or more tree models corresponding to the second collaborator to constitute a second data set with the screened feature columns and the first data set comprises:
filtering out feature columns with weights less than a first threshold from the feature columns obtained by the one or more tree models corresponding to the second collaborator to obtain first remaining feature columns;
performing correlation analysis on feature column pairs constituted by every two feature columns in the first remaining feature columns;
determining the feature column pairs having correlation coefficients greater than a second threshold to constitute second remaining feature columns with all feature column pairs having correlation coefficients not greater than the second threshold; and
selecting a feature column with a larger weight value in each of the determined feature column pairs having correlation coefficients greater than the second threshold, to use selected feature columns and the second remaining feature columns as the screened feature columns, or
wherein the screening the feature columns obtained by the one or more tree models corresponding to the second collaborator to constitute a second data set with the screened feature columns and the first data set comprises:
setting respective weight thresholds for the one or more tree models corresponding to the second collaborator;
filtering, according to the respective weight thresholds, the feature columns obtained by the one or more tree models corresponding to the second collaborator to filter out feature columns with weights less than corresponding ones of the respective weight thresholds, so as to obtain first remaining feature columns;
performing correlation analysis on feature column pairs constituted by every two feature columns in the first remaining feature columns;
determining the feature column pairs having correlation coefficients greater than a second threshold to constitute second remaining feature columns with all feature column pairs having correlation coefficients not greater than the second threshold; and
selecting a feature column with a larger weight value in each of the determined feature column pairs having correlation coefficients greater than the second threshold, to use selected feature columns and the second remaining feature columns as the screened feature columns.

5. The method according to claim 2, wherein the encryption algorithm comprises one of an RSA algorithm and a Pailler algorithm.

6. The method according to any one of the foregoing claims, wherein each of the tree models comprises one of an XGBoost model and a LightGBM model.

7. The method according to any one of the foregoing claims, wherein the linear model comprises one of a logistic regression (LR) model and a Poisson regression (PR) model.

8. The method according to any one of the foregoing claims, wherein the data of the shared user samples comprises label data indicating whether the user samples have clicked advertisements and behavior data of the user samples.

9. A multi-model training device based on federated feature extraction, the device comprising:
a tree model training unit (410) configured to train, in collaboration with corresponding ones of a plurality of collaborators, corresponding ones of a plurality of tree models based on corresponding data of user samples shared with the corresponding ones of the plurality of collaborators, wherein data transmission with each of the plurality of collaborators is performed in an encrypted form;
an importance evaluation unit (420) configured to perform feature importance evaluation on the trained plurality of tree models for assigning respective weights to feature columns generated by respective ones of the plurality of tree models;
a feature extraction unit (430) configured to: in response to a determination that a linear model is to be trained in collaboration with a first collaborator of the plurality of collaborators, inputting data of a first user sample shared with the first collaborator to the tree model corresponding to the first collaborator and one or more tree models corresponding to a second collaborator of the plurality of collaborators, to obtain a plurality of one-hot encoded feature columns, wherein the second collaborator is one or more of the plurality of collaborators other than the first collaborator; and
a linear model training unit (440) configured to screen the obtained feature columns based on the respective weights and train the linear model according to the screened feature columns and the data of the first user sample.

10. The device according to claim 9, wherein the tree model training unit is configured to:
receive public keys respectively generated by the plurality of collaborators based on an encryption algorithm, to encrypt data to be transmitted to corresponding ones of the plurality of collaborators using corresponding ones of the public keys;
for each collaborator:
receive derivatives encrypted by the collaborator using its generated public key to compute a gradient sum for a corresponding bin; and
transmit the gradient sum to the collaborator, so that the collaborator decrypts the gradient sum using a private key generated based on the encryption algorithm to train the tree model corresponding to the collaborator

11. The device according to any one of claims 9 to 10, wherein the linear model training unit is configured to:
select the feature columns obtained by the tree model corresponding to the first collaborator to constitute a first data set with the selected feature columns and the data of the first user sample;
screen the feature columns obtained by the one or more tree models corresponding to the second collaborator to constitute a second data set with the screened feature columns and the first data set; and
train the linear model based on the second data set.

12. The device according to claim 11, wherein the screening the feature columns obtained by the one or more tree models corresponding to the second collaborator to constitute a second data set with the screened feature columns and the first data set comprises:
filtering out feature columns with weights less than a first threshold from the feature columns obtained by the one or more tree models corresponding to the second collaborator to obtain first remaining feature columns;
performing correlation analysis on feature column pairs constituted by every two feature columns in the first remaining feature columns;
determining the feature column pairs having correlation coefficients greater than a second threshold to constitute second remaining feature columns with all feature column pairs having correlation coefficients not greater than the second threshold; and
selecting a feature column with a larger weight value in each of the determined feature column pairs having correlation coefficients greater than the second threshold, to use selected feature columns and the second remaining feature columns as the screened feature columns, or
wherein the screening the feature columns obtained by the one or more tree models corresponding to the second collaborator to constitute a second data set with the screened feature columns and the first data set comprises:
setting respective weight thresholds for the one or more tree models corresponding to the second collaborator;
filtering, according to the respective weight thresholds, the feature columns obtained by the one or more tree models corresponding to the second collaborator to filter out feature columns with weights less than corresponding ones of the respective weight thresholds, so as to obtain first remaining feature columns;
performing correlation analysis on feature column pairs constituted by every two feature columns in the first remaining feature columns;
determining the feature column pairs having correlation coefficients greater than a second threshold to constitute second remaining feature columns with all feature column pairs having correlation coefficients not greater than the second threshold; and
selecting a feature column with a larger weight value in each of the determined feature column pairs having correlation coefficients greater than the second threshold, to use selected feature columns and the second remaining feature columns as the screened feature columns.

13. The device according to claim 9, wherein the data of the shared user samples comprises label data indicating whether the user samples have clicked advertisements and behavior data of the user samples.

14. A computer program product comprising program code portions for performing the method of any one of claims 1 to 8 when the computer program product is executed on one or more computing devices.

15. A computer-readable storage medium that stores a program, the program comprising instructions that, when executed by a processor of an electronic device, cause the electronic device to perform a method according to any one of claims 1 to 8.
